(19) Europäisches Patentamt
European Patent Office
Office européen des brevets

(11) EP 2 325 272 A2

(12) EUROPEAN PATENT APPLICATION

(43) Date of publication:
25.05.2011 Bulletin 2011/21

(51) Int Cl.:
C09J 7/00 (2006.01)　　C09J 7/02 (2006.01)
C09J 133/04 (2006.01)

(21) Application number: 10190411.8

(22) Date of filing: 09.11.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 09.11.2009 JP 2009256033

(71) Applicant: NITTO DENKO CORPORATION
Ibaraki-shi, Osaka 567-8680 (JP)

(72) Inventors:
• Takarada, Shou
  Ibaraki-shi Osaka (JP)
• Nonaka, Takahiro
  Ibaraki-shi Osaka (JP)
• Banba, Tomohide
  Ibaraki-shi Osaka (JP)

(74) Representative: Grünecker, Kinkeldey,
Stockmair & Schwanhäusser
Anwaltssozietät
Leopoldstrasse 4
80802 München (DE)

(54) Optical-use pressure-sensitive adhesive sheet

(57) The present invention provides an optical-use pressure-sensitive adhesive sheet including a pressure-sensitive adhesive layer having, as measured through dynamic viscoelastometry, a storage elastic modulus at 80°C of at least $2.0 \times 10^4$ Pa and a loss elastic modulus at 80°C of at least $1.0 \times 10^4$ Pa, in which the pressure-sensitive adhesive sheet has a peel force, as measured in the L-shape peel test, of at least 0.16 MPa, and has a peel distance, as measured in the constant-load peel test (under a load of 100 gf for 3 hours), of at most 50 mm. Preferably the acrylic pressure-sensitive adhesive layer contains an acrylic polymer formed of one or more monomer ingredients including, as an indispensable monomer ingredient, an alkyl (meth)acrylate having a linear or branched alkyl group having from 1 to 14 carbon atoms and/or an alkoxyalkyl (meth)acrylate.

FIG. 1

EP 2 325 272 A2

**Description**

FIELD OF THE INVENTION

The present invention relates to an optical-use pressure-sensitive adhesive sheet which is used in attaching optical members.

BACKGROUND OF THE INVENTION

Recently, display devices such as liquid-crystal displays (LCD), and input devices to be combined with the display devices such as touch panels have become widely used in various fields. In producing such display devices and input devices, transparent pressure-sensitive adhesive sheets are used for attaching optical members. For example, for attaching a touch panel or a lens to liquid-crystal display devices (such as liquid-crystal displays), transparent double-sided pressure-sensitive adhesive sheets are used (for example, see JP-A-2003-238915, JP-A-2003-342542 and JP-A-2004-231723).

Recently, display devices and input devices mentioned above have become much used in small-sized portable instruments such as mobile telephones and personal digital assistances (PDA). With such development, for example, in case where a person sits down with his(her) mobile telephone kept put in the pocket of his(her) pants, there often occurs a problem in that the display may peel from the touch panel or the lens since the display may be given a bending, twisting or quirking stress (stress in the bending direction or the twisting or quirking direction).

Accordingly, in the application of attaching the above-mentioned optical members to each other, pressure-sensitive adhesive sheets have become required to have adhesiveness (hereinafter this adhesiveness may be generically referred to as "twist-proof adhesiveness") resistant to bending stress or twisting or quirking stress given to the attached object, in addition to the adhesiveness (for example, 180-degree peel adhesion force) and transparency which have heretofore been required for those pressure-sensitive adhesive sheets.

SUMMARY OF THE INVENTION

Accordingly, an object of the invention is to provide an optical-use double-sided pressure-sensitive adhesive sheet which is excellent in adhesiveness (twist-proof adhesiveness) resistant to bending stress or twisting or quirking stress given to attached object.

The inventors have assiduously studied for the purpose of attaining the above-mentioned object and, as a result, have found that a double-sided pressure-sensitive adhesive sheet, in which the pressure-sensitive adhesive layer is so planned that its storage elastic modulus at 80°C and loss elastic modulus at 80°C are controlled to fall each within a specific range; and which is further so controlled that its peel force as measured in an L-shape peel test, and its peel distance as measured in a constant-load peel test (under a load of 100 gf for 3 hours) fall each within a specific range, is excellent in twist-proof adhesiveness. On the basis of this finding, the inventors have completed the present invention.

Namely, the present invention provides an optical-use pressure-sensitive adhesive sheet comprising a pressure-sensitive adhesive layer having, as measured through dynamic viscoelastometry, a storage elastic modulus at 80°C of at least $2.0 \times 10^4$ Pa and a loss elastic modulus at 80°C of at least $1.0 \times 10^4$ Pa,

the pressure-sensitive adhesive sheet having a peel force, as measured in the following L-shape peel test, of at least 0.16 MPa, and having a peel distance, as measured in the following constant-load peel test (under a load of 100 gf for 3 hours), of at most 50 mm,

wherein the L-shape peel test is performed such that an L-shaped stainless fixture and an acrylic plate are attached via the pressure-sensitive adhesive sheet (size: 25 mm length $\times$ 25 mm width) and processed in an autoclave under conditions at 50°C and at 5 atmospheres for 15 minutes, and subsequently the peel force is measured by pulling the stainless fixture in the direction vertical to the surface of the acrylic plate at a pulling speed of 200 mm/min under conditions at 23°C and 50% RH, and

wherein the constant-load peel test (under a load of 100 gf for 3 hours) is performed such that a pressure-sensitive adhesive layer side of the pressure-sensitive adhesive sheet (20 mm width $\times$ 60 mm length) is stuck to one surface of an acrylic plate and then processed in an autoclave under conditions at 50°C and at 5 atmospheres for 15 minutes, and subsequently, the peel distance is measured after the pressure-sensitive adhesive sheet is let stand under conditions at 23°C and 50% RH for 3 hours while a load of 100 gf is kept applied to the end in the lengthwise direction of the pressure-sensitive adhesive sheet, in the direction vertical to the surface of the acrylic plate.

In an embodiment, the optical-use pressure-sensitive adhesive sheet has a whole light transmittance in a visible light wavelength region of at least 90% and a haze value of less than 1.0%.

In an embodiment, the optical-use pressure-sensitive adhesive sheet has, as measured at a pulling speed of 200 mn/min, a 180°-peel force with respect to an acrylic plate of at least 10 N/25 mm.

In an embodiment, the pressure-sensitive adhesive layer has a gel fraction of from 30 to 80% by weight.

In an embodiment, the pressure-sensitive adhesive layer is an acrylic pressure-sensitive adhesive layer.

In an embodiment, the acrylic pressure-sensitive adhesive layer contains an acrylic polymer formed of one or more monomer ingredients including, as an indispensable monomer ingredient, an alkyl (meth)acrylate having a linear or branched alkyl group having from 1 to 14 carbon atoms and/or an alkoxyalkyl (meth)acrylate.

In an embodiment, the pressure-sensitive adhesive layer is formed by irradiating a composition containing a monomer mixture or a prepolymer thereof with UV rays.

In the double-sided pressure-sensitive adhesive sheet of the invention, the storage elastic modulus at 80°C and the loss elastic modulus at 80°C of the pressure-sensitive adhesive layer each fall within a specific range and the peel force of the adhesive sheet, as measured in an L-shape peel test, and the peel distance thereof, as measured in a constant-load peel test (under a load of 100 gf for 3 hours), each fall within a specific range. Therefore, the pressure-sensitive adhesive sheet is excellent in twist-proof adhesiveness. Accordingly, even when the objects (optical members) attached via the double-sided pressure-sensitive adhesive sheet are given bending stress, twisting stress or quirking stress, the objects do not peel. As a result, the adhesion reliability of the pressure-sensitive adhesive sheet is high in the produced articles, especially in small-sized articles or portable articles that may be readily given bending stress, twisting stress or quirking stress.

BRIEF DESCRIPTION OF THE DRAWINGS

Fig. 1 is an outline view (perspective view) showing an L-shape stainless fixture in the L-shape peel test.

Fig. 2 is an explanatory view (side view) showing a bonded sample (L-shape stainless fixture/double-sided pressure-sensitive adhesive sheet/acrylic plate bonded sample) and the pulling direction in measurement, in the L-shape peel test.

Fig. 3 is an explanatory view (perspective view) showing the positional relationship among the acrylic plate, the double-sided pressure-sensitive adhesive sheet (or test sample) and the weight, in the constant-load peel test (under a load of 100 gf for 3 hours).

Fig. 4 is an explanatory view (side view) showing the positional relationship among the acrylic plate, the double-sided pressure-sensitive adhesive sheet (or test sample) and the weight at the start of measurement, in the constant-load peel test (under a load of 100 gf for 3 hours).

Fig. 5 is an explanatory view (side view) showing the peeled state of the double-sided pressure-sensitive adhesive sheet (or test sample) after a lapse of 3 hours from the start of measurement and the constant-load 3-hours peel distance, in the constant-load peel test (under a load of 100 gf for 3 hours).

Fig. 6 is an outline view (plan view) showing a test piece in twist-proof adhesiveness evaluation.

Fig. 7 is an explanatory view (side view) showing a test method for twist-proof adhesiveness evaluation (before deformation).

Fig. 8 is an explanatory view (side view) showing the test method for twist proof adhesiveness evaluation (after deformation).

Description of Reference Numerals

11   L-shaped stainless fixture
12   Acrylic plate
13   Double-sided pressure-sensitive adhesive sheet
14   Attached sample (L-shaped stainless fixture/double-sided pressure-sensitive adhesive sheet/acrylic plate)
21   Acrylic plate
22   Double-sided pressure-sensitive adhesive sheet [or test sample (double-sided pressure-sensitive adhesive sheet/PET film)]
23   Weight
24   End position at which the double-sided pressure-sensitive sheet (or test sample) and the acrylic plate are attached at the start of the measurement
25   End position at which the double-sided pressure-sensitive sheet (or test sample) and the acrylic plate are attached after a lapse of 3 hours from the start of the measurement
26   Peel distance (constant-load 3-hours peel distance)
31   Attached structure of acrylic plate and polarizer

32     Attached structure of acrylic plate and double-sided pressure-sensitive adhesive sheet
33     Fixed part
34     Jack
35     Peel

DETAILED DESCRIPTION OF THE INVENTION

The double-sided pressure-sensitive adhesive sheet (optical-use pressure-sensitive adhesive sheet) of the invention is a double-sided pressure-sensitive adhesive sheet of which the surfaces on both sides are pressure-sensitive adhesive faces (pressure-sensitive adhesive layer surfaces). The double-sided pressure-sensitive adhesive sheet of the invention includes at least one pressure-sensitive adhesive layer that has, as measured through dynamic viscoelastometry, a storage elastic modulus at 80°C of at least $2.0 \times 10^4$ Pa and a loss elastic modulus at 80°C of at least $1.0 \times 10^4$ Pa (hereinafter this may be referred to as " pressure-sensitive adhesive layer of the invention"). Further, the double-sided pressure-sensitive adhesive sheet of the invention has a peel force, as measured in the L-shape peel test mentioned below, of at least 0.16 MPa, and has a peel distance, as measured in the constant-load peel test (under a load of 100 gf for 3 hours) mentioned below, of at most 50 mm.

In the invention, "double-sided pressure-sensitive adhesive sheet" includes both a tape-like one and a sheet-like one, or in other words, it is a generic term including both a double-sided pressure-sensitive adhesive sheet and a double-sided pressure-sensitive adhesive tape.

The double-sided pressure-sensitive adhesive sheet of the invention may be a so-called "substrateless type" double-sided pressure-sensitive adhesive sheet (hereinafter this may be referred to as "substrateless double-sided pressure-sensitive adhesive sheet") having no substrate (substrate layer), or a substrate-having type double-sided pressure-sensitive adhesive sheet. The substrateless double-sided pressure-sensitive adhesive sheet includes, for example, a double-sided pressure-sensitive adhesive sheet composed only of the pressure-sensitive adhesive layer of the invention, as well as a double-sided pressure-sensitive adhesive sheet including the pressure-sensitive adhesive layer of the invention and any other pressure-sensitive adhesive layer (this may be hereinafter referred to as "other pressure-sensitive adhesive layer") than the pressure-sensitive adhesive layer of the invention. It is sufficient for the substrate-having type pressure-sensitive double-sided adhesive tape to have the pressure-sensitive adhesive layer of the invention on at least one side of the substrate. Above all, from the viewpoint of enhancing the optical properties such as the transparency thereof, preferred is the substrateless double-sided pressure-sensitive adhesive sheet, and more preferred is a substrateless double-sided pressure-sensitive adhesive sheet composed only of the pressure-sensitive adhesive layer of the invention. The above-mentioned "substrate (substrate layer)" does not include a release liner (separator) to be released before using (attaching) the double-sided pressure-sensitive adhesive sheet.

With regard to the pressure-sensitive adhesive layer of the invention, the storage elastic modulus at 80°C as measured through dynamic viscoelastometry (hereinafter this may be referred to as "storage elastic modulus (80°C)" or "G' (80°C)") is at least $2.0 \times 10^4$ Pa, preferably from $2.0 \times 10^4$ to $1.0 \times 10^7$ Pa, more preferably from $3.0 \times 10^4$ to $3.0 \times 10^5$ Pa. When the storage elastic modulus (80°C) is less than $2.0 \times 10^4$ Pa, the pressure-sensitive adhesive layer is soft and its adhesiveness is insufficient especially at high temperatures, and the optical member as adherend may readily peel. When it exceeds $1.0 \times 10^7$ Pa, then the pressure-sensitive adhesive layer sometimes cannot follow deformation by bending or twisting, therefore causing peeling.

With regard to the pressure-sensitive adhesive layer of the invention, the storage elastic modulus at 23°C as measured through dynamic viscoelastometry (hereinafter this may be referred to as "storage elastic modulus (23°C)" or "G' (23°C)") is preferably at least $4.0 \times 10^4$ Pa, more preferably from $4.0 \times 10^4$ to $1.0 \times 10^8$ Pa, even more preferably from $4.0 \times 10^4$ to $1.0 \times 10^6$ Pa. When the storage elastic modulus (23°C) is less than $4.0 \times 10^4$ Pa, the adhesive layer is soft and its adhesiveness is insufficient, and the optical member as adherend may readily peel in some cases. When it exceeds $1.0 \times 10^8$ Pa, then the pressure-sensitive adhesive layer sometimes cannot follow deformation by bending or twisting, therefore causing peeling.

With regard to the pressure-sensitive adhesive layer of the invention, the loss elastic modulus at 80°C as measured through dynamic viscoelastometry (hereinafter this may be referred to as "loss elastic modulus (80°C)" or "G" (80°C)") is at least $1.0 \times 10^4$ Pa, preferably from $1.0 \times 10^4$ to $1.0 \times 10^6$ Pa, more preferably from $1.0 \times 10^4$ to $3.0 \times 10^5$ Pa. When the loss elastic modulus (80°C) is less than $1.0 \times 10^4$ Pa, the pressure-sensitive adhesive layer is soft and its adhesiveness is insufficient especially at high temperatures, and the optical member as adherend may readily peel. When it exceeds $1.0 \times 10^6$ Pa, then the pressure-sensitive adhesive layer sometimes cannot follow deformation by bending or twisting, therefore causing peeling.

With regard to the pressure-sensitive adhesive layer of the invention, the loss elastic modulus at 23°C as measured through dynamic viscoelastometry (hereinafter this may be referred to as "loss elastic modulus (23°C)" or "G" (23°C)") is preferably at least $1.0 \times 10^4$ Pa, more preferably from $1.0 \times 10^4$ to $1.0 \times 10^7$ Pa, even more preferably from $1.0 \times 10^4$ to $1.0 \times 10^6$ Pa. When the loss elastic modulus (23°C) is less than $1.0 \times 10^4$ Pa, the pressure-sensitive adhesive layer is soft and its adhesiveness is insufficient especially at high temperatures, and the optical member as adherend may readily peel in some cases, When it exceeds $1.0 \times 10^7$ Pa, then the pressure-sensitive adhesive layer sometimes cannot follow deformation by bending or twisting, therefore causing peeling.

The storage elastic modulus and the loss elastic modulus are measured through dynamic viscoelastometry. For example, plural pressure-sensitive adhesive layers are laminated to have a total thickness of about 1.5 mm or so, and analyzed with Rheometric Scientific's "Advanced Rheometric Expansion System (ARES)" in a shear mode under conditions at a frequency of 1 Hz and at a heating rate of 5°C/min within a range of from -70 to 200°C.

Preferably, the gel fraction in the pressure-sensitive adhesive layer of the invention is from 30 to 80% (% by weight), more preferably from 45 to 80%. The gel fraction may be taken as the ethyl acetate-insoluble fraction in the pressure-sensitive adhesive layer. Concretely, the pressure-sensitive adhesive layer is dipped in ethyl acetate at 23°C for 7 days, and the insoluble weight fraction (unit: % by weight) with respect to the sample weight before dipping is computed In case where the gel fraction is less than 30%, the pressure-sensitive adhesive layer may sometimes be too soft, and when the pressure-sensitive adhesive layer is bent, twisted or quirked, it may be broken therefore causing peeling. On the other hand, in case where the gel fraction is more than 80%, the pressure-sensitive adhesive layer may sometimes be hard, and when it is bent, twisted or quirked, it cannot follow deformation therefore causing peeling, or that is, the twist-proof adhesiveness of the layer may lower in some cases.

Concretely, for example, the gel fraction (proportion of solvent-insoluble matter) is computed according to the "method for measurement of gel fraction" mentioned below.

(Method for Measurement of Gel Fraction)

About 0.1 g of the pressure-sensitive adhesive layer of the invention is separated from the double-sided pressure-sensitive adhesive sheet of the invention, wrapped with a porous tetrafluoroethylene sheet having a mean pore size of 0.2 $\mu$m (Nitto Denko's trade name "NTF1122"), then tied up with a kite string, and its weight is measured as the weight before dipping. The weight before dipping is the total weight of the pressure-sensitive adhesive layer (this is the pressure-sensitive adhesive layer of the invention collected in the above), the tetrafluoroethylene sheet and the kite string. On the other hand, the total weight of the tetrafluoroethylene sheet and the kite string is also measured as the wrapping weight.

Next, the pressure-sensitive adhesive layer wrapped with the tetrafluoroethylene sheet and tied up with the kite string (this is referred to as "sample") is put into a 50-ml chamber filled with ethyl acetate, and kept therein at 23°C for 7 days. Subsequently, the sample (treated with ethyl acetate) is taken out of the chamber, transferred into an aluminium cup, and dried in a drier at 130°C for 2 hours to remove ethyl acetate, and thereafter its weight is measured as the weight after dipping.

The gel fraction is computed according to the following formula:

$$\text{Gel Fraction (\% by weight)} = (A - B)/(C - B) \times 100 \qquad (1)$$

wherein A is the weight after dipping, B is the wrapping weight, and C is the weight before dipping.

In the double-sided pressure-sensitive adhesive sheet of the invention, the 180-degree peel adhesion force of the surface of the pressure-sensitive adhesive layer of the invention with respect to an acrylic plate (hereinafter this may be referred to as "180-degree peel adhesion force (with respect to acrylic plate)") is preferably at least 10 N/25 mm (for example, from 10 to 50 N/25 mm), more preferably at least 15 N/25 mm. When the 180-degree peel adhesion force (with respect to acrylic plate) is less than 10 N/25 mm, the adhesion reliability of the sheet may sometimes be poor. The 180-degree peel adhesion force (with respect to acrylic plate) can be measured by stacking the double-sided pressure-sensitive adhesive sheet to an acrylic plate as an adherend and processing them in an autoclave under conditions at 50°C and at 5 atmospheres for 15 minutes, followed by measurement in accordance with 180-degree peeling test. More concretely, for example, a polymethyl methacrylate (PMMA) plate (Mitsubishi Rayon's "Acrylite MR-200" having a thickness of 1.5 mm) is used as an adherend (test plate), the surface of the pressure-sensitive adhesive layer of the double-sided pressure-sensitive adhesive sheet of the invention is stuck to the object, then processed in an autoclave under conditions at 50°C and at 5 atmospheres for 15 minutes, and thereafter according to JIS Z 0237, the sheet is peeled at 180° under the condition of a peeling speed of 200 mm/min, and the intended peel adhesion force of the sheet is thereby measured. A liner (PET film, Toray's "Lumirror S-10" having a thickness of 25 $\mu$m) may be stuck to the side (adhesive face) of the pressure-sensitive adhesive layer which is opposite to the side to be analyzed.

In the double-sided pressure-sensitive adhesive sheet of the invention, the 180-degree peel adhesion force of the surface of the pressure-sensitive adhesive layer of the invention with respect to a polarizer (hereinafter this may be referred to as "180-degree peel adhesion force (with respect to polarizer)") is preferably at least 2 N/25 mm (for example, from 2 to 20 N/25 mm), more preferably at least 2.5 N/25 mm. When the 180-degree peel adhesion force (with respect to polarizer) is less than 2 N/25 mm, then the adhesion reliability of the pressure-sensitive adhesive sheet may sometimes be poor. The 180-degree peel adhesion force (with respect to polarizer) may be determined in the same manner as that for the above-mentioned 180-degree peel adhesion force (with respect to acrylic plate) except that a polarizer (Nitto Denko's trade name "TEG1465DUHC", hard coat face) is used as an adherend.

The pressure-sensitive adhesive layer of the invention preferably has high transparency, and for example, the whole light transmittance in a visible light wavelength region (according to JIS K 7361) thereof is preferably at least 90%, more preferably at least 91%. The haze value of the pressure-sensitive adhesive layer of the invention (according to JIS K 7136) is, for example, preferably less than 1.0%, more preferably less than 0.8%. The whole light transmittance and the haze value may be measured, for example, by sticking the pressure-sensitive adhesive layer of the invention to a slide glass (for example, having a whole light transmittance of 91.8% and a haze value of 0.4%) and analyzing it with a haze meter (Murakami Color Search Laboratory's trade name "HM-150").

Furthermore, the double-sided pressure-sensitive adhesive sheet of the invention also preferably has high transparency, and for example, the whole light transmittance in a visible light wavelength region (according to JIS K 7361) thereof is preferably at least 90%, more preferably at least 91%. The haze value of the double-sided pressure-sensitive adhesive sheet of the invention (according to JIS K 7136) is, for example, preferably less than 1.0%, more preferably less than 0.8%. The whole light transmittance and the haze value may be measured, for example, by sticking the double-sided pressure-sensitive adhesive sheet of the invention to a slide glass (for example, having a whole light transmittance of 91.8% and a haze value of 0.4%) and analyzing it with a haze meter (Murakami Color Search Laboratory's trade name "HM-150").

The peel force (hereinafter this may be referred to as "L-shape peel force"), as measured in an L-shape peel test, of the double-sided pressure-sensitive adhesive sheet of the invention is at least 0.16 MPa, preferably from 0.2 to 1.0 MPa. The L-shape peel force indicates the peelability of the sheet when given bending stress, twisting stress or quirking stress (at the moment just when given the stress). In case where the L-shape peel force of the double-sided pressure-sensitive adhesive sheet is less than 0.16 MPa, the twist-proof adhesiveness of the sheet is insufficient and when the article produced by attaching and fixing optical members with the double-sided pressure-sensitive adhesive sheet is given bending stress, twisting stress or quirking stress, the optical members may peel and the reliability of the article may lower.

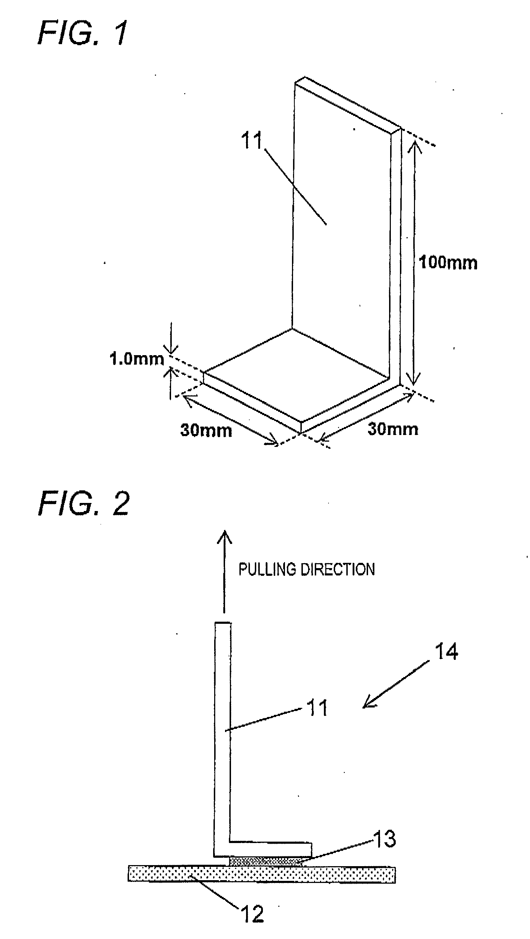

The L-shape peel test is as follows (see Fig. 1 and Fig. 2).

(L-shape Peel Test)

An L-shaped stainless fixture 11 [the length (height) of the long side of the L-shaped cross section is 100 mm, the length of the short side of the L-shaped cross section is 30 mm, the width is 30 mm and the plate thickness is 1.0 mm] shown in Fig. 1, and an acrylic plate [PMMA plate, Mitsubishi Rayon's "Acrylite MR-200" having a size of 100 mm length × 50 mm width × 1.5 mm thickness] are used.

As shown in Fig. 2, the bottom (face having a size of 30 mm length × 30 mm width) of the L-shaped stainless fixture 11 and the acrylic plate 12 are attached via the double-sided pressure-sensitive adhesive sheet 13 (having a size of 25 mm length × 25 mm width), and then processed in an autoclave under conditions at 50°C and at 5 atmospheres for 15 minutes. Subsequently, using a tensile tester under conditions at 23°C and 50% RH, the stainless fixture 11 is pulled in the direction vertical to the acrylic plate 12 at a pulling speed of 200 mm/min, and the peel force (MPa) is measured as the "L-shape peel force".

The peel distance (hereinafter this may be referred to as "constant-load 3-hours peel distance"), as measured in a constant-load peel test (under a load of 100 gf for 3 hours), of the double-sided pressure-sensitive adhesive sheet of the invention is at most 50 mm, preferably from 0 to 45 mm, more preferably from 0 to 40 mm. The constant-load 3-hours peel distance indicates the peelability of the sheet when given bending stress, twisting stress or quirking stress for a long time. In case where the constant-load 3-hours peel distance of the double-sided pressure-sensitive adhesive sheet is more than 50 mm, the twist-proof adhesiveness of the sheet is insufficient, and when the article produced by attaching and fixing optical members with the double-sided pressure-sensitive adhesive sheet is given bending stress, twisting stress or quirking stress for a long period of time, the optical members may peel and the reliability of the article may lower.

The constant-load peel test (under a load of 100 gf for 3 hours) is as follows:

A pressure-sensitive adhesive layer side of the double-sided pressure-sensitive adhesive sheet of the invention (20 mm width × 60 mm length) is stuck to one face of an acrylic plate, and then processed in an autoclave under conditions at 50°C and at 5 atmospheres for 15 minutes, and subsequently, a load of 100 gf is kept applied to the end in the lengthwise direction of the double-sided pressure-sensitive adhesive sheet, in the direction vertical to the surface of the acrylic plate (that is, in the direction moving apart from the acrylic plate). Then, the sheet is let stand under the condition at 23°C and 50% RH for 3 hours, and the peeled length (peel distance) of the pressure-sensitive adhesive sheet is measured as the "constant-load 3-hours peel distance".

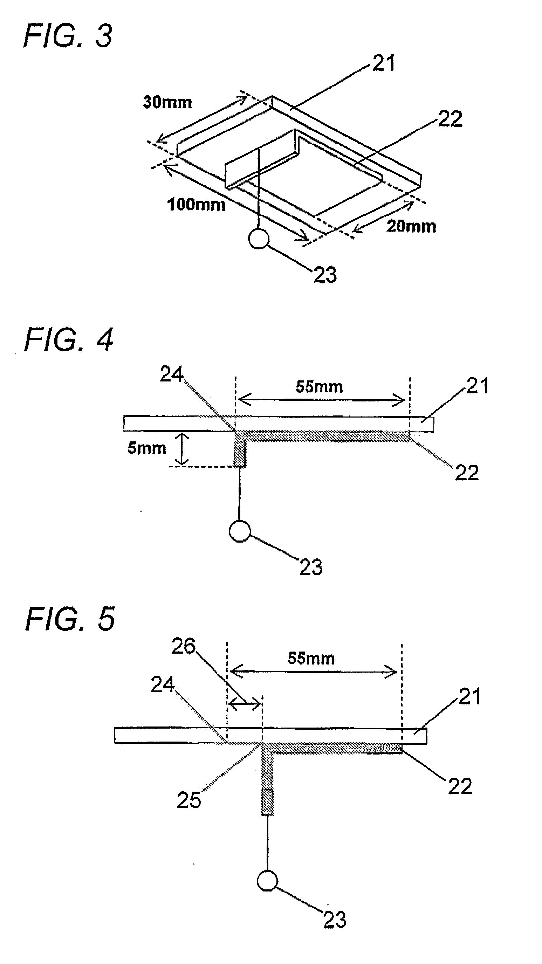

A more concrete test method is, for example, as follows (see Figs. 3 to 5).

[Constant-Load Peel Test (under 100-gfload for 3 hours)]

The pressure-sensitive adhesive layer side of the double-sided pressure-sensitive adhesive sheet of the invention (20 mm width × 60 mm length) is stuck to one face of an acrylic plate [PMMA plate, Mitsubishi Rayon's "Acrylite MR-200", having a size of 100 mm length × 30 mm width × 1.5 mm thickness), and then processed in an autoclave under conditions at 50°C and at 5 atmospheres for 15 minutes.

Next, as shown in Fig. 3 and Fig. 4, the acrylic plate 21 is set horizontally in such a manner that its face with the double-sided pressure-sensitive adhesive sheet 22 stuck thereto faces downward. The double-sided pressure-sensitive adhesive sheet 22 is peeled from the end (one end) in the lengthwise direction of the sheet toward the lengthwise direction by 5 mm, and from the edge in the lengthwise direction (at the center position in the lateral direction) of the sheet, a weight 23 of 100 g is hung with a string, whereby a load of 100 gf is given to the end in the lengthwise direction of the double-sided pressure-sensitive adhesive sheet 22, in the direction vertical to the surface of the acrylic plate.

Subsequently, under conditions at 23°C and 50% RH, this is left as such for 3 hours, and the peel distance 26 of the double-sided pressure-sensitive adhesive sheet 22 is measured as the "constant-load 3-hours peel distance".

The peel distance is the length (distance in the lengthwise direction) of the peeled part of the double-sided pressure-sensitive adhesive sheet during the period from the start of measurement to the time after a lapse of 3 hours, or that is, this means the distance 26 from the end position 24 of the double-sided pressure-sensitive adhesive sheet having adhered to the acrylic plate at the start of the measurement to the end position 25 of the double-sided pressure-sensitive adhesive sheet adhering to the acrylic plate after the lapse of 3 hours (see Fig. 4 and Fig. 5).

A polyethylene terephthalate (PET) film may be stuck (as a liner) to the pressure-sensitive adhesive face, opposite to the acrylic plate side, of the double-sided pressure-sensitive adhesive sheet in the measurement.

The peel distance (hereinafter this may be referred to as "constant-load 24-hours peel distance"), as measured in a constant-load peel test (under a load of 100 gf for 24 hours), of the double-sided pressure-sensitive adhesive sheet of the invention is preferably at most 50 mm, more preferably from 0 to 45 mm, even more preferably from 0 to 40 mm. The constant-load 24-hours peel distance indicates the peelability of the sheet when given bending stress, twisting stress or quirking stress for a further longer period of time than that for the constant-load 3-hours peel distance. The constant-load peel test (under a load of 100 gf for 24 hours) is the same as the above-mentioned "constant-load peel test (under a load of 100 gf for 3 hours)", except that the time for which the sample is let stand is changed from 3 hours to 24 hours and that the "length of the peeled part of the double-sided pressure-sensitive adhesive sheet during the period from the start of measurement to the time after 24 hours" is measured in place of the "length of the peeled part of the double-sided pressure-sensitive adhesive sheet during the period from the start of measurement to the time after 3 hours".

According to the double-sided pressure-sensitive adhesive sheet of the invention, since the storage elastic modulus (at 80°C) and the loss elastic modulus (at 80°C) of the pressure-sensitive adhesive layer of the invention each fall within the above-mentioned specific range, even under relative high-temperature conditions, the pressure-sensitive adhesive layer does not too much soften and the twist-proof adhesiveness thereof is thereby enhanced.

Further, since the L-shape peel force of the double-sided pressure-sensitive adhesive sheet falls within the above-mentioned specific range, the sheet hardly peels at the moment when bending stress, twisting stress or quirking stress is given thereto; and furthermore, since the constant-load 3-hours peel distance of the sheet falls within the above-mentioned specific range, the sheet also hardly peels even when bending stress, twisting stress or quirking stress is given thereto for a long period of time.

In addition, in case where the 180-degree peel adhesion force (with respect to acrylic plate) of the side of the pressure-sensitive adhesive layer of the invention in the double-sided pressure-sensitive adhesive sheet of the invention falls within the above-mentioned range, especially when the pressure-sensitive adhesive sheet is stuck to an acrylic plate, the pressure-sensitive adhesive sheet hardly peels from the acrylic plate and hardly foams. Further, in case where the 180-degree peel adhesion force (with respect to polarizer) of the side of the pressure-sensitive adhesive layer of the invention in the double-sided pressure-sensitive adhesive sheet of the invention falls within the above-mentioned range, especially when the adhesive sheet is stuck to a polarizer, the pressure-sensitive adhesive sheet hardly peels from the polarizer and hardly foams. Accordingly, in these cases, the double-sided pressure-sensitive adhesive sheet is especially favorable for optical use.

Not specifically defined, the thickness of the pressure-sensitive adhesive layer of the invention is preferably from 50 to 600 μm, more preferably from 70 to 500 μm, even more preferably from 70 to 250 μm. In case where the thickness of the pressure-sensitive adhesive layer is less than 50 μm, since the pressure-sensitive adhesive layer is too thin and cannot follow bending deformation or twisting deformation, the twist-proof adhesiveness thereof may sometimes lower. When the thickness is more than 600 μm, then the workability of the sheet may sometimes lower. The pressure-sensitive adhesive layer of the invention may have any form of a single layer or a laminate.

The overall thickness (thickness from one adhesive face to the other adhesive face) of the double-sided pressure-sensitive adhesive sheet of the invention is preferably from 50 to 600 μm, more preferably from 70 to 500 μm, even more preferably from 70 to 250 μm, When the overall thickness of the double-sided pressure-sensitive adhesive sheet is less than 50 μm, since the pressure-sensitive adhesive layer is too thin and cannot follow bending deformation or twisting deformation, the twist-proof adhesiveness thereof may sometimes lower. On the other hand, when the thickness is more than 600 μm, the workability of the sheet may sometimes lower.

In the double-sided pressure-sensitive adhesive sheet of the invention, the type of the pressure-sensitive adhesive for forming the pressure-sensitive adhesive layer is not specifically defined, so far as the pressure-sensitive adhesive layer has a storage elastic modulus (80°C) of at least $2.0 \times 10^4$ Pa and a loss elastic modulus (80°C) of at least $1.0 \times 10^4$ Pa, and the double-sided pressure-sensitive adhesive sheet has a L-shape peel force of at least 0.16 MPa and a constant-load 3-hours peel distance of at most 50 mm. As the pressure-sensitive adhesive for forming the pressure-sensitive adhesive layer of the invention, for example, there may be mentioned known pressure-sensitive adhesives such as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine-containing pressure-sensitive adhesives and epoxy pressure-sensitive adhesives. One or more of these pressure-sensitive adhesives may be used here either singly or as combined. The pressure-sensitive adhesive may have any form, and for example, herein usable are emulsion pressure-sensitive adhesives, solvent-based (solution) adhesives, active energy ray-curable pressure-sensitive adhesives, hot-melt pressure-sensitive adhesives, etc.

As the pressure-sensitive adhesive for forming the pressure-sensitive adhesive layer of the invention, preferred is an acrylic pressure-sensitive adhesive. Namely, the pressure-sensitive adhesive layer of the invention is preferably an acrylic pressure-sensitive adhesive layer. The acrylic pressure-sensitive adhesive layer is a pressure-sensitive adhesive layer that contains, as the base polymer therein, an acrylic polymer formed of one or more monomer ingredients including an acrylic monomer as an indispensable monomer ingredient. The acrylic polymer is preferably formed of one or more monomer ingredients including, as an indispensable monomer ingredient (more preferably a main monomer ingredient), an alkyl (meth)acrylate having a linear or branched alkyl group and/or an alkoxyalkyl (meth)acrylate.

The monomer ingredient for forming the acrylic polymer that serves as the base polymer in the pressure-sensitive adhesive layer of the invention may further contain a polar group-having monomer, a polyfunctional monomer and any other copolymerizable monomer as the comonomer ingredient therein.

The above-mentioned term "(meth)acryl" means "acryl" and/or "methacryl", and the same shall apply to those in the present specification. Not specifically defined, the content of the acrylic polymer as the base polymer in the pressure-sensitive adhesive layer of the invention is preferably at least 60% by weight (for example, from 60 to 100% by weight), more preferably from 80 to 100% by weight, relative to the total weight (100% by weight) of the pressure-sensitive adhesive layer.

Examples of the linear or branched alkyl group-having alkyl (meth)acrylate (hereinafter this may be simply referred to as "alkyl (meth)acrylate") include alkyl (meth)acrylates in which the alkyl group has from 1 to 20 carbon atoms, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth) acrylate, heptadecyl (meth)acrylate, octadecyl (meth)acrylate, nonadecyl (meth)acrylate, eicosyl (meth)acrylate, etc. One or more such alkyl (meth)acrylates may be used here either singly or as combined. Of those, preferred are alkyl (meth)acrylates where the alkyl group has from 1 to 14 carbon atoms; more preferred are alkyl (meth)acrylates where the alkyl group has from 1 to 10 carbon atoms; even more preferred is 2-ethylhexyl acrylate (2EHA).

Not specifically defined, examples of the alkoxyalkyl (meth)acrylate include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, 4-ethoxybutyl (meth)acrylate, etc. One or more such alkoxyalkyl (meth) acrylates may be used here either singly or as combined. Above all, preferred are alkoxyalkyl acrylates; and more preferred is 2-methoxyethyl acrylate (2MEA).

The content of the indispensable monomer ingredient [alkyl (meth)acrylate and/or alkoxyalkyl (meth)acrylate] for forming the acrylic polymer is, from the viewpoint of the adhesiveness of the pressure-sensitive adhesive layer, preferably at least 5% by weight (for example, from 5 to 100% by weight), more preferably from 30 to 100% by weight, relative to the total amount (100% by weight) of whole monomer ingredients for forming the acrylic polymer. In case where both alkyl (meth)acrylate and alkoxyalkyl (meth)acrylate are used as the monomer ingredients, it is enough that the total (total content) of the content of the alkyl (meth)acrylate and the content of the alkoxyalkyl (meth)acrylate satisfy the above range.

Examples of the above-mentioned polar group-having monomer include carboxyl group-having monomers such as (meth)acrylic acid, itaconic acid, maleic acid, fumaric acid, crotonic acid, isocrotonic acid, etc., and their acid anhydrides (e.g., maleic anhydride, etc.); hydroxyl group-having monomers such as hydroxyalkyl (meth)acrylates, e.g., 2-hydroxyethyl (meth)acrylate, 3-hydroxypropyl (meth)acrylate, 4-hydroxybutyl (meth)acrylate, 6-hydroxyhexyl (meth) acrylate, etc., vinyl alcohol, allyl alcohol, etc.; amide group-having monomers such as (meth)acrylamide, N,N-dimethyl (meth)acrylamide, N-methylol(meth)acrylamide, N-methoxymethyl(meth)acrylamide, N-butoxymethyl(meth)acrylamide, N-hydroxyethyl(meth)acrylamide, etc.; amino group-having monomers such as aminoethyl (meth)acrylate, dimethylaminoethyl (meth)acrylate, t-butylaminoethyl (meth)acrylate, etc.; glycidyl group-having monomers such as glycidyl (meth) acrylate, methylglycidyl (meth)acrylate, etc.; cyano group-having monomers such as acrylonitrile, methacrylonitrile, etc.; hetero ring-having vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrrole, N-vinylimidazole, N-vinyloxazole, etc.; sulfonic acid group-having monomers such as sodium vinylsulfonate, etc.; phosphoric acid group-having monomers such as 2-hydroxyethyl acryloylphosphate, etc.; imide group-having monomers such as cyclohexylmaleimide, isopropylmaleimide, etc.; isocyanate group-having monomers such as 2-methacryloyloxyethyl isocyanate, etc. One or more such polar group-having monomers may be used here either singly or as combined. Of the above-mentioned polar group-having monomers, more preferred are carboxyl group-having monomers and acid anhydrides thereof, hydroxyl group-having monomers, amino group-having monomers, amide group-having monomers, hetero ring-having vinyl monomers; and even more preferred are acrylic acid (AA), 4-hydroxybutyl acrylate (4HBA), N-vinyl-2-pyrrolidone (NVP), and N-hydroxyethylacrylamide (HEAA).

The content of the polar group-having monomer is preferably at most 35% by weight (for example, from 0.01 to 35% by weight), more preferably from 0.5 to 35% by weight, relative to total amount (100% by weight) of whole monomer ingredients for forming the acrylic polymer. When the content is more than 35% by weight, for example, the cohesive force of the pressure-sensitive adhesive layer may be too high and the adhesiveness thereof may sometimes lower. When the content is less than 0.01% by weight, the adhesiveness of the layer may sometimes lower.

Examples of the polyfunctional monomer includes hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, etc. One or more such polyfunctional monomers may be used here either singly or as combined. Of these polyfunctional monomers, more preferred is trimethylolpropane triacrylate (TMPTA).

The content of the polyfunctional monomer is at most 0.5% by weight (for example, from 0 to 0.5% by weight), preferably from 0 to 0.3% by weight or less, relative to the total amount (100% by weight) of whole monomer ingredients for forming the acrylic polymer. When the content is more than 0.5% by weight, for example, the cohesive force of the pressure-sensitive adhesive layer may be too high and the adhesiveness of the adhesive layer may sometimes lower. In case where a crosslinking agent is used, the polyfunctional monomer may not be used. However, when a crosslinking agent is not used, the content of the polyfunctional monomer is preferably from 0.001 to 0.5% by weight, more preferably from 0.002 to 0.1% by weight.

As the copolymerizable monomer (other copolymerizable monomer) other than the polar group-having monomer and the polyfunctional monomer, there may be mentioned, for example, (meth)acrylates other than the above-mentioned alkyl (meth)acrylates, alkoxyalkyl (meth)acrylates, polar group-having monomers and polyfunctional monomers, such as alicyclic hydrocarbon group-having (meth)acrylates, e.g., cyclopentyl (meth)acrylate, cyclohexyl (meth)acrylate, isobornyl (meth)acrylate, etc., and aromatic hydrocarbon group-having (meth)acrylates, e.g., phenyl (meth)acrylate, etc.; vinyl esters such as vinyl acetate, vinyl propionate, etc.; aromatic vinyl compounds such as styrene, vinyltoluene, etc.; olefins or dienes such as ethylene, butadiene, isoprene, isobutylene, etc.; vinyl ethers such as vinyl alkyl ether, etc.; vinyl chloride, etc.

The acrylic polymer may be produced by polymerizing the monomer ingredients according to a known or conventional polymerization method. The polymerization method for the acrylic polymer includes, for example, a solution polymerization method, an emulsion polymerization method, a bulk polymerization method, an active energy ray-irradiation polymerization method (active energy ray polymerization method), etc. Of those, preferred are a solution polymerization method and an active energy ray polymerization method from the viewpoint of the transparency, the waterproofness and the cost of the polymer. Especially for forming a relatively thick adhesive layer, preferred is an active energy ray polymerization (photopolymerization) method; and more preferred is a UV polymerization method with irradiation with UV rays.

The active energy rays to be radiated in the above active energy ray polymerization (photopolymerization) include, for example, ionizing radiations such as α rays, β rays, γ rays, neutron rays, electron beams, etc.; UV rays, etc. Especially preferred are UV rays.

In the active energy ray polymerization (photopolymerization), the radiation energy, the radiation time and the radiation method for active energy rays are not specifically defined so far as the radiated rays could activate the photopolymerization initiator used to thereby initiate the reaction of the monomer ingredients.

In the solution polymerization, various ordinary solvents may be used. The solvent includes organic solvents, for example, esters such as ethyl acetate, n-butyl acetate, etc.; aromatic hydrocarbons such as toluene, benzene, etc.; aliphatic hydrocarbons such as n-hexane, n-heptane, etc.; alicyclic hydrocarbons such as cyclohexane, methylcyclohexane, etc.; ketones such as methyl ethyl ketone, methyl isobutyl ketone, etc. One or more such solvents may be used here either singly or as combined.

In producing the acrylic polymer, a polymerization initiator such as a thermal polymerization initiator, a photopolymerization initiator (optical initiator) or the like may be used depending on the kind of the polymerization method. One or more such polymerization initiators may be used here either singly or as combined.

Not specifically defined, examples of the photopolymerization initiator include benzoin ether photopolymerization initiators, acetophenone photopolymerization initiators, $\alpha$-ketol photopolymerization initiators, aromatic sulfonyl chloride photopolymerization initiators, optical-active oxime photopolymerization initiators, benzoin photopolymerization initiators, benzyl photopolymerization initiators, benzophenone photopolymerization initiators, ketal photopolymerization initiators, thioxanthone photopolymerization initiators, etc. Not specifically defined, the amount of the photopolymerization initiator to be used is preferably from 0.01 to 0.2 parts by weight, more preferably from 0.05 to 0.15 parts by weight, relative to 100 parts by weight of the total amount of whole monomer ingredients for forming the acrylic polymer.

Examples of the benzoin ether photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one, anisole methyl ether, etc. Examples of the acetophenone photopolymerization initiator include 2,2-diethoxyacetophenone, 2,2-dimethoxy-2-phenylacetophenone, 1-hydroxycyclohexylphenylacetophenone, 4-phenoxydichloroacetophenone, 4-(t-butyl)dichloroacetophenone, etc. Examples of the $\alpha$-ketol photopolymerization initiator include 2-methyl-2-hydroxypropiophenone, 1-[4-(2-hydroxyethyl)phenyl]-2-methylpropan-1-one, etc. Examples of the aromatic sulfonyl chloride photopolymerization initiator include 2-naphthalenesulfonyl chloride, etc. Examples of the optical-active oxime photopolymerization initiator include 1-phenyl-1,1-propanedione-2-(o-ethoxycarbonyl)-oxime, etc. Examples of the benzoin photopolymerization initiator include benzoin, etc. Examples of the benzyl photopolymerization initiator include benzyl, etc. Examples of the benzophenone photopolymerization initiator include benzophenone, benzoylbenzoic acid, 3,3'-dimethyl-4-methoxybenzophenone, polyvinylbenzophenone, $\alpha$-hydroxycyclohexyl phenyl ketone, etc. Examples of the ketal photopolymerization initiator include benzyl dimethyl ketal, etc. Examples of the thioxanthone photopolymerization initiator include thioxanthone, 2-chlorothioxanthone, 2-methylthioxanthone, 2,4-dimethylthioxanthone, isopropylthioxanthone, 2,4-diisopropylthioxanthone, dodecylthioxanthone, etc.

Examples of the thermal polymerization initiator include azo polymerization initiators [for example, 2,2'-azobisisobutyronitrile, 2,2'-azobis-2-methylbutyronitrile, dimethyl 2,2'-azobis(2-methylpropionate), 4,4'-azobis-4-cyanovalerianic acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride, etc.], peroxide polymerization initiators (for example, dibenzoyl peroxide, tert-butyl permaleate, etc.), redox polymerization initiators, etc. Not specifically defined, the amount of the thermal polymerization initiator to be used may be in a range applicable to ordinary thermal polymerization initiators.

If desired, the pressure-sensitive adhesive layer of the invention may contain any known additives such as crosslinking agents, crosslinking promoters, tackifiers (e.g., rosin derivative resins, polyterpene resins, petroleum resins, oil-soluble phenolic resins, etc.), aging inhibitors, fillers, colorants (pigments, dyes, etc.), UV absorbers, antioxidants, chain transfer agents, plasticizers, softeners, surfactants, and antistatic agents in the range where the characteristics of the invention are not impaired. Moreover, in formation of the pressure-sensitive adhesive layer of the invention, various ordinary solvents can be also used. The type of the solvent is not particularly limited and those exemplified as the solvent to be used in the above-mentioned solution polymerization can be used.

The crosslinking agent acts to crosslink the base polymer (e.g., the above-mentioned acrylic polymer) in the pressure-sensitive adhesive layer to thereby control the gel fraction in the pressure-sensitive adhesive layer, Examples of the crosslinking agent include an isocyanate crosslinking agent, an epoxy crosslinking agent, a melamine crosslinking agent, a peroxide crosslinking agent, an urea crosslinking agent, a metal alkoxide crosslinking agent, a metal chelate crosslinking agent, a metal salt crosslinking agent, a carbodiimide crosslinking agent, an oxazoline crosslinking agent, an aziridine crosslinking agent, an amine crosslinking agent, etc. Preferred are an isocyanate crosslinking agent and an epoxy crosslinking agent. One or more such crosslinking agents may be used here either singly or as combined.

Examples of the isocyanate crosslinking agent include lower aliphatic polyisocyanates such as 1,2-ethylene diisocyanate, 1,4-butylene diisocyanate, 1,6-hexamethylene diisocyanate, etc.; alicyclic polyisocyanates such as cyclopentylene diisocyanate, cyclohexylene diisocyanate, isophorone diisocyanate, hydrogenated tolylene diisocyanate, hydrogenated xylylene diisocyanate, etc.; aromatic polyisocyanates such as 2,4-tolylene diisocyanate, 2,6-tolylene diisocyanate, 4,4'-diphenylmethane diisocyanate, xylylene diisocyanate, etc. In addition, also usable are trimethylolpropane/tolylene diisocyanate adduct [Nippon Polyurethane Industry's trade name, "Coronate L"], trimethylolpropane/hexamethylene diisocyanate adduct [Nippon Polyurethane Industry's trade name, "Coronate HL"], etc.

Examples of the epoxy crosslinking agent include N,N,N',N'-tetraglycidyl-m-xylylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl tris(2-hydroxyethyl)isocyanurate, resorcin diglycidyl ether, bisphenol S diglycidyl ether, as well as epoxy resins having at least two epoxy groups in the molecule, etc. As a commercial product, for example, herein usable is Mitsubishi Gas Chemical's trade name, "Tetrad C".

Not specifically defined, the amount of the crosslinking agent to be in the pressure-sensitive adhesive composition is, for example, in case where the pressure-sensitive adhesive layer is an acrylic pressure-sensitive adhesive layer, preferably from 0 to 1 part by weight, more preferably from 0 to 0,8 parts by weight, relative to the total amount (100 parts by weight) of whole monomer ingredients for forming the acrylic polymer.

For forming the pressure-sensitive adhesive layer in the invention, any known or conventional pressure-sensitive adhesive layer formation methods are employable. The pressure-sensitive adhesive layer formation method varies depending on the polymerization method for the base polymer, and is therefore not specifically defined. For example, the following methods (1) to (3) are mentioned. (1) A composition comprising a mixture of monomer ingredients (monomer mixture) to form a base polymer (for example, an acrylic polymer, etc.) or its prepolymer, and optionally additives such as a photopolymerization initiator, a crosslinking agent or the like is applied onto a substrate or a release liner by coating, and irradiated with active energy rays (especially preferably UV rays) to form a pressure-sensitive adhesive layer thereon. (2) A composition (solution) containing a base polymer, a solvent, and optionally additives such as a crosslinking agent or the like is applied onto a substrate or a release liner by coating, and dried and/or cured to form a pressure-sensitive adhesive layer thereon. (3) The pressure-sensitive adhesive layer formed according to (1) is further dried. Of the above, preferred is the pressure-sensitive adhesive layer formation method (1) or (3) for forming a relatively thick pressure-sensitive adhesive layer (for example, a pressure-sensitive adhesive layer having a thickness of at least 70 $\mu$m). Specifically, the pressure-sensitive adhesive layer in the invention is preferably formed by irradiating a pressure-sensitive adhesive composition comprising a monomer mixture or its prepolymer and optionally additives such as a photopolymerization initiator, a crosslinking agent or the like, with active energy rays (especially UV rays). The term "monomer mixture" means a mixture consisting of monomer ingredients for forming an acrylic polymer. The term "prepolymer" means a composition in which one or more of the constitutive ingredients of the monomer mixture are partly polymerized.

For the coating with the composition for forming the pressure-sensitive adhesive layer, employable is any known coating method with an ordinary coater, for example, a gravure roll coater, a reverse roll coater, a kiss roll coater, a dip roll coater, a bar coater, a knife coater, a spray coater, a comma coater, a direct coater, etc.

In case where the pressure-sensitive adhesive layer of the invention is an acrylic pressure-sensitive adhesive layer, the storage elastic modulus (80°C) and the loss elastic modulus (80°C) of the pressure-sensitive adhesive layer as well as the L-shape peel force and the constant-load 3-hours peel distance of the double-sided pressure-sensitive adhesive sheet may be controlled by suitably controlling the type and the content of the monomer and the type and the amount of the crosslinking agent in forming the acrylic polymer each within the above-mentioned range.

(Substrate)

In case where the double-sided pressure-sensitive adhesive sheet of the invention is a substrate-having, double-sided pressure-sensitive adhesive sheet, examples of the substrate include, but not specifically defined thereto, various types of optical films such as plastic films, antireflection (AR) films, polarizers, retarders, etc. The material of the plastic films includes plastic materials, for example, polyester resins such as polyethylene terephthalate (PET), etc.; acrylic resins such as polymethyl methacrylate (PMMA), etc.; polycarbonates, triacetyl cellulose (TAC), polysulfones, polyarylates, cyclic olefin polymers such as Arton (cyclic olefin polymer, JSR's trade name), Zeonoa (cyclic olefin polymer, Nippon Zeon's trade name), etc. One or more such plastic materials may be used here either singly or as combined. The "substrate" herein is a part of the double-sided pressure-sensitive adhesive sheet which is applied (stuck) to an adherend (optical member, etc.) along with the pressure-sensitive adhesive layer of the sheet when the sheet is applied (stuck) to the adherend. A release liner (separator) to be removed in use (application) of the double-sided pressure-sensitive adhesive sheet is not within the category of the "substrate".

Of the above, preferred is a transparent substrate. The "transparent substrate" is, for example, preferably one having a whole light transmittance (according to JIS K7361) in a visible light wavelength range of at least 85%, more preferably at least 90%. Examples of the transparent substrate include PET films, and nonorientation films such as Arton (trade name), Zeonoa (trade name), etc.

Not specifically defined, the thickness of the substrate is, for example, preferably from 25 to 50 $\mu$m. The

substrate may have a single-layer or multi-layer structure. The surface of the substrate may be suitably processed for known or conventional surface treatment of physical treatment such as corona discharge treatment, plasma treatment or the like, or chemical treatment such as undercoating treatment, etc.

(Other Pressure-Sensitive Adhesive Layer)

In case where the double-sided pressure-sensitive adhesive sheet of the invention has any other pressure-sensitive adhesive layer, such other pressure-sensitive adhesive layer is not specifically defined, for which, for example, there may be mentioned any known or conventional pressure-sensitive adhesive layer formed of a known pressure-sensitive adhesive such as an urethane pressure-sensitive adhesive, an acrylic pressure-sensitive adhesive, a rubber pressure-sensitive adhesive, a silicone pressure-sensitive adhesive, a polyester pressure-sensitive adhesive, a polyamide pressure-sensitive adhesive, an epoxy pressure-sensitive adhesive, a vinyl alkyl ether pressure-sensitive adhesive, a fluorine-containing pressure-sensitive adhesive, etc. One or more such pressure-sensitive adhesives may be used either singly or as combined.

(Release Liner)

A pressure-sensitive adhesive layer surface (pressure-sensitive adhesive surface) of the double-sided pressure-sensitive adhesive sheet of the invention may be protected with a release liner (separator) until use. The two pressure-sensitive adhesive surfaces of the double-sided pressure-sensitive adhesive sheet may be individually protected with two separators, or may be protected with one, double-sided release liner to be in the form of a wound-up roll. The release liner serves as a protective material for the pressure-sensitive adhesive layer, and when the pressure-sensitive adhesive sheet is attached to an adherend, it is peeled away. In case where the double-sided pressure-sensitive adhesive sheet of the invention is a substrateless double-sided pressure-sensitive adhesive sheet, the release liner serves also as a support for the pressure-sensitive adhesive layer. The release liner is not indispensable. As the release liner, usable is any ordinary release paper or the like. Not specifically defined, also usable are a support having a lubrication-processed layer, a poorly-adhesive support comprising a fluorine-containing polymer, a poorly-adhesive support comprising a non-polar polymer, etc. Examples of the support having a lubrication-processed layer include plastic films and paper surface-treated with a lubrication-processing agent such as silicone compounds, long-chain alkyl compounds, fluorine compounds, molybdenum sulfide, etc. Examples of the fluorine-containing polymer for the poorly-adhesive support comprising the fluorine-containing polymer include polytetrafluoroethylene, polychlorotrifluoroethylene, polyvinyl fluoride, polyvinylidene fluoride, tetrafluoroethylene/hexafluoroethylene copolymer, chlorofluoroethylene/vinylidene fluoride copolymer, etc. Examples of the non-polar polymer for the poorly-adhesive support comprising a non-polar polymer include olefinic resins (e.g., polyethylene, polypropylene), etc. The release liner may be formed in any known or conventional method. The thickness of the release liner is not specifically defined.
The double-sided pressure-sensitive adhesive sheet of the invention is an optical-use double-sided pressure-sensitive adhesive sheet which is used for optical applications. More concretely, the sheet is used in attaching optical members (as a sheet for attaching optical members) or in producing optical articles.
The optical member is meant to indicate a member having optical properties (for example, polarization, light refractivity, light scatterability, light reflectivity, light transmission, light absorption, light diffraction, optical rotation or visibility). Not specifically defined, the optical member may be any member having optical properties, and examples thereof include members constituting instruments (optical instruments) such as display devices (image display devices), input devices, etc., and members for use for those instruments. For example, they include polarizer, wave plate, retarder, optical compensatory film, brightness increasing film, light guide plate, reflection film, antireflection film, transparent conductive film (ITO film, etc.), design film, decoration film, surface protective film, prism, lens, color filter, transparent substrate, and members laminated with these. The terms "plate" and "film" as referred to herein shall include plate-like, film-like and sheet-like forms; and for example, "polarization plate" shall also include "polarization film" and "polarization sheet".
The display device includes, for example, liquid-crystal display devices, organic EL (electroluminescent) display devices, PDP (plasma display panels), electronic papers, etc. The input device includes touch panels, etc.
Of the above, the double-sided pressure-sensitive adhesive sheet of the invention is preferably used in attaching members constituting liquid-crystal display devices, or in attaching members for use in liquid-crystal display devices (for use in attaching optical members for liquid-crystal display devices). More concretely, for example, the sheet is preferably used in attaching polarizer and lens, in attaching liquid-crystal display device and touch panel, etc.
Not specifically defined, the optical member includes, for example, members (e.g., sheet-like, film-like or plate-like members) made of acrylic resin, polycarbonate resin, polyethylene terephthalate, glass, metal thin film, etc. The term "optical member" in the invention may include members that play a role of decoration or protection (design film, decoration film, surface protective film, etc.) while securing the visibility of the adherend, i.e., display device and input device, as described in the above.

The mode of attaching optical members via the double-sided pressure-sensitive adhesive sheet of the invention is not specifically defined. For example, (1) an optical member may be attached to another optical member via the double-sided pressure-sensitive adhesive sheet of the invention; (2) an optical member may be attached to a member other than an optical member via the double-sided pressure-sensitive adhesive tape of the invention; or (3) the double-sided pressure-sensitive adhesive sheet of the invention that includes an optical member is attached to an optical member or a member other than an optical member. In the embodiment (3), the substrate of the double-sided pressure-sensitive adhesive sheet of the invention is preferably an optical member (e.g., optical film such as typically a polarization film).

The double-sided pressure-sensitive adhesive sheet of the invention may be attached to and laminated on the surface (at least one side) of an optical member to thereby give a pressure-sensitive adhesive-type optical member having a pressure-sensitive adhesive layer (preferably, pressure-sensitive adhesive layer of the invention) on at least one side of the optical member.

Examples

The invention is described in more detail with reference to the following Examples, to which, however, the invention should not be limited.

The monomer formulation composition [monomer type and monomer blend ratio (by weight)], and the formulation of the composition for forming acrylic pressure-sensitive adhesive layer are shown in Table 1.

Example 1:

0.05 parts by weight of "Irgacure 184" (trade name by Ciba Specialty Chemicals) and 0.05 parts by weight of "Irgacure 651" (trade name by Ciba Specialty Chemicals), both serving as a photopolymerization initiator, were added to a mixture of 70 parts by weight of 2-ethylhexyl acrylate (2EHA), 26 parts by weight of N-vinyl-2-pyrrolidone (NVP) and 4 parts by weight ofN-hydroxyethylacrylamide (HEAA), and then irradiated with UV rays until its viscosity (as measured with a BH viscometer No. 5 rotor, 10 rpm, temperature 30°C) could reach about 20 Pas thereby preparing a prepolymer composition where a part of the monomer ingredients were polymerized.

0.05 parts by weight, in terms of the solid content thereof, of an isocyanate crosslinking agent (Nippon Polyurethane Industry's "Coronate HL") was added to 100 parts by weight of the prepolymer composition prepared in the above to give a composition for forming acrylic pressure-sensitive adhesive layer.

The composition for forming acrylic pressure-sensitive adhesive layer was applied onto a polyethylene terephthalate (PET) separator (Mitsubishi Resin's "MRF75"), thereby forming a coating layer.

Next, a PET separator (Mitsubishi Resin's "MRF38") was provided on the coating layer, with which the coating layer was covered so as to be blocked from oxygen.

Subsequently, the sheet (laminate of MRF75/coating layer/MRF38) was irradiated with UV rays at an illumination intensity of 5 mW/cm$^2$ with a black light (by Toshiba), from the top (on the side of MRF38) thereof for 300 seconds. Further, this was dried in a drier at 120°C for 2 minutes to remove the remaining monomers through evaporation, thereby forming a pressure-sensitive adhesive layer (acrylic pressure-sensitive adhesive layer); and further this was aged under heat at 50°C for 1 week, thereby producing a double-sided pressure-sensitive adhesive sheet (substrate-less double-sided pressure-sensitive adhesive sheet) having a thickness (pressure-sensitive adhesive layer thickness) of 151 $\mu$m.

Example 2:

A prepolymer composition, a composition for forming acrylic pressure-sensitive adhesive layer and a double-sided pressure-sensitive adhesive sheet (substrateless double-sided pressure-sensitive adhesive sheet) were produced in the same manner as in Example 1, except that the amount of Coronate L added and the thickness of the pressure-sensitive adhesive layer were changed as shown in Table 1.

Examples 3 and 4:

A prepolymer composition was prepared in the same manner as in Example 1, except that a mixture of 80 parts by weight of 2-ethylhexyl acrylate (2EHA), 11.5 parts by weight of 2-methoxyethyl acrylate (2MEA), 7 parts by weight of N-vinyl-2-pyrrolidone (NVP) and 1.5 parts by weight of N-hydroxyethylacrylamide (HEAA) was used as in Table 1.

An isocyanate crosslinking agent (Coronate L) was added to the prepolymer composition as shown in Table 1, thereby preparing a composition for forming acrylic pressure-sensitive adhesive layer.

A double-sided pressure-sensitive adhesive sheet (substrateless double-sided pressure-sensitive adhesive sheet) was produced in the same manner as in Example 1, except that this composition for forming acrylic pressure-sensitive adhesive layer is used and the thickness of the pressure-sensitive adhesive layer is changed.

Comparative Examples 1 and 2:

A prepolymer composition was prepared in the same manner as in Example 1, except that a mixture of 99 parts by weight of 2-ethylhexyl acrylate (2EHA) and 1 part by weight of 4-hydroxybutyl acrylate (4HBA) was used as shown in Table 1.
An isocyanate crosslinking agent (Coronate L) was added to the prepolymer composition as shown in Table 1, thereby preparing a composition for forming acrylic pressure-sensitive adhesive layer.
A double-sided pressure-sensitive adhesive sheet (substrateless double-sided pressure-sensitive adhesive sheet) was produced in the same manner as in Example 1, except that this composition for forming acrylic pressure-sensitive adhesive layer is used and the thickness of the pressure-sensitive adhesive layer is changed.

(Evaluation)

Each of the double-sided pressure-sensitive adhesive sheet (acrylic pressure-sensitive adhesive layer) obtained in Examples and Comparative Examples was evaluated as mentioned below. The evaluation results are shown in Table 1, The gel fraction was determined according to the above-mentioned method.

(1) Dynamic viscoelastometry [storage elastic modulus (80°C), storage elastic modulus (23°C), loss elastic modulus (80°C) and loss elastic modulus (23°C)]:

In each of Examples and Comparative Examples, the separator was peeled from each of a plurality of the double-sided pressure-sensitive adhesive sheets produced, and only a plurality of the acrylic pressure-sensitive adhesive layers were laminated to prepare a laminate of acrylic pressure-sensitive adhesive layers having a thickness of about 1.5 mm as a measurement sample.
The measurement sample was analyzed with Rheometric Scientific's "Advanced Rheometric Expansion System (ARES)" in a shear mode under conditions at a frequency of 1 Hz and at a heating rate of 5°C/min within a range of from -70 to 200°C, and the storage elastic modulus and the loss elastic modulus thereof were computed. The storage elastic modulus and the loss elastic modulus at a temperature of 80°C are referred to as "storage elastic modulus (80°C)" and "loss elastic modulus (80°C)", respectively. The storage elastic modulus and the loss elastic modulus at a temperature of 23°C are referred to as "storage elastic modulus (23°C)" and "loss elastic modulus (23°C)", respectively.

(2) L-shape Peel Test [L-shape peel force] (see Fig. 1 and Fig. 2):

Each of the double-sided pressure-sensitive adhesive sheet produced in Examples and Comparative Examples was cut into a test piece having a size of 25 mm length × 25 mm width to be tested here.
As a fixture, an L-shaped stainless fixture 11 [the length (height) of the long side of the L-shaped cross section is 100 mm, the length of the short side of the L-shaped cross section is 30 mm, the width is 30 mm and the plate thickness is 1.0 mm] shown in Fig. 1 was used. As an adherend to be attached to the fixture, an acrylic plate [PMMA plate, Mitsubishi Rayon's "Acrylite MR-200" having a size of 100 mm length × 50 mm width × 1.5 mm thickness] was used.
As shown in Fig. 2, to the center part of the bottom (face having a size of 30 mm × 30 mm) of the L-shaped stainless fixture 11, the double-sided pressure-sensitive adhesive sheet 13 from which the separator on one side thereof had been peeled was attached under pressure of a 2-kg roller [2-kg rubber roller (width: about 50 mm)] driven to run once thereon.
Next, the L-shaped stainless fixture 11 with the double-sided pressure-sensitive adhesive sheet 13 attached thereto was, after the remaining separator was peeled from the double-sided pressure-sensitive adhesive sheet 13, attached to the acrylic plate 12 under pressure of a 2-kg roller driven to run once thereon. Accordingly, the attached sample 14 shown in Fig. 2 (attached structure of L-shaped stainless fixture 11/doublesided pressure-sensitive adhesive sheet 13/acrylic plate 12) was thus prepared.
The attached sample 14 was processed in an autoclave under conditions at 50°C and at 5 atmospheres for 15 minutes. After the treatment, the attached sample 14 was taken out of the autoclave, and then, under conditions at 23°C and 50% RH, the peel force of the L-shaped stainless fixture 11 in the attached sample 14 was measured using a tensile tester (Minebea's Model "TCM-1kNB"). For the measurement, concretely, the acrylic plate 12 was fixed, and the stainless fixture 11 was pulled in the direction vertical to the surface of the acrylic late at a pulling speed of 200 mm/min, and the peel force (adhesion force) (MPa) was measured to be regarded as "L-shape peel force". In this regard, the peak of the peel curve is regarded as the peel force.

(3) Constant-Load Peel test [constant-load 1-hour peel distance, constant-load 3-hours peel distance and constant-load 24-hours peel distance] (see Figs. 3 to 5):

(3-1) Constant-Load Peel Test (under 100-gf load for 3 hours) [constant-load 3-hours peel distance]:

Each of the double-sided pressure-sensitive adhesive sheet produced in Examples and Comparative Examples was cut into a size of 20 mm width $\times$ 60 mm length, the separator was peeled from one pressure-sensitive adhesive face of the sheet, and a PET film (Toray's trade name, "Lumirror S-10" having a thickness of 25 $\mu$m) was attached (as a liner) to the pressure-sensitive adhesive face thereby preparing a test sample (attached structure of double-sided pressure-sensitive adhesive sheet/PET film).

In the test sample 22, the remaining separator was peeled from the double-sided pressure-sensitive adhesive sheet, and the thus-exposed pressure-sensitive adhesive face was attached to one side (center part) of an acrylic plate 21 [PMMA plate, Mitsubishi Rayon's "Acrylite MR-200" having a size of 100 mm length $\times$ 30 mm width $\times$ 1.5 mm thickness), under pressure of a 2-kg roller driven to run once thereon.

Next, the acrylic plate 21 with test sample 22 attached thereto was processed in an autoclave under conditions at 50°C and at 5 atmospheres for 15 minutes.

After the above-mentioned treatment, the acrylic plate 21 with test sample 22 attached thereto was taken out of the autoclave. Then, using a clamp, the acrylic plate 21 was set horizontally in such a manner that its face with the test sample 22 attached thereto faced downward (Fig. 3 and Fig. 4).

As shown in Fig. 3 and Fig. 4, the test sample 22 was peeled from the acrylic plate 21 from one end of the sample in the lengthwise direction toward the lengthwise direction by 5 mm. Further, from the edge (the peeled part) in the lengthwise direction of the test sample 22, a weight 23 of 100 g was hung with a string, whereby a load of 100 gf (0.98 N) was given to the sample in the vertical (downward) direction relative to the surface of the acrylic plate 21. The load 23 was fitted to the tip of the string that had been attached to the test sample 22 by making it to run through the hole formed in the part of 5 mm from the edge in the lengthwise direction of the sample and at the center of the lateral direction of the sample. After the load was given thereto in the manner as above, the sample was let stand under conditions at 23°C and 50% RH for 3 hours. The distance (peel distance) 26 by which the test sample 22 peeled during the period from the start of the measurement to the time after the lapse of 3 hours (during storage for 3 hours) was measured as the "constant-load 3-hours peel distance".

The peel distance 26 is the peel distance in the lengthwise direction of the test sample 22, and this means the distance 26 from the end position 24 at which the double-sided pressure sensitive adhesive sheet and the acrylic plate had bonded at the start of the measurement to the end position 25 at which the double-sided pressure-sensitive adhesive sheet and the acrylic plate had bonded after the lapse of 3 hours from the start of the test (see Fig. 4 and Fig. 5). The peel distance 26 is measured at the center position in the lateral direction of the test sample 22.

In case where the test sample 22 peeled completely and where the test sample 22 and the weight 23 dropped down (in case where the peel distance was more than 50 mm), the test result of the sample was expressed as "dropped" in Table 1.

(3-2) Constant-Load Peel Test (under 100-gf load for 1 hour) [constant-load 1-hour peel distance], and Constant-Load Peel Test (under 100-gf load for 24 hours) [constant-load 24-hours peel distance]:

A peel distance was measured in the same manner as in the above, except that the sample was let stand not for 3 hours but for 1 hour, and this was regarded as "constant-load 1-hour peel distance". In addition, a peel distance was measured also in the same manner as in the above, except that the sample was let stand not for 3 hours but for 24 hours, and this was regarded as "constant-load 24-hours peel distance".

(4) 180-Degree Peel Adhesion Force (with respect to acrylic plate or with respect to polarizer):

Each of the double-sided pressure-sensitive adhesive sheet produced in Examples and Comparative Examples was cut into a sheet piece having a size of 25 nun width $\times$ 100 mm length, the separator was peeled off, and a PET film (Toray's "Lumirror S-10", 25 $\mu$m) was attached (as a lining) to one pressure-sensitive adhesive face (opposite to the face to be tested) thereof, thereby preparing a long rectangular sheet piece.

Next, the separator was peeled from the long rectangular sheet piece, and the other pressure-sensitive adhesive face (test face) is attached to a test plate under pressure of a 2-kg roller driven to run once thereon, thereby preparing a test sample.

The test sample was processed in an autoclave under conditions at 50°C and at 5 atmospheres for 15 minutes, then taken out of the autoclave. This test sample was tested in a 180-degree peel test using a tensile tester and in accordance with JIS 20237, whereby the 180-degree peel strength with respect to the test plate (180-degree peel adhesion force) (N/25 mm) of the test sample was measured. Regarding the test conditions, the sample was tested in an environment at 23°C and 50% RH at a peeling angle of 180° and at a pulling speed of 200 mm/min. The number of measurements (number, n) was 3.

When an acrylic plate (PMMA plate, Mitsubishi Rayon's "Acrylite MR-200", having a thickness of 1.5 mm) was used as the test plate, the 180-degree peel strength was expressed as "180-degree peel adhesion force (with respect to acrylic plate)".

When a polarizer (Nitto Denko's trade name, "TEG1465DUHC", hard coat surface) was used as the test plate, the 180-degree peel strength was expressed as "180-degree peel adhesion force (with respect to polarizer)".

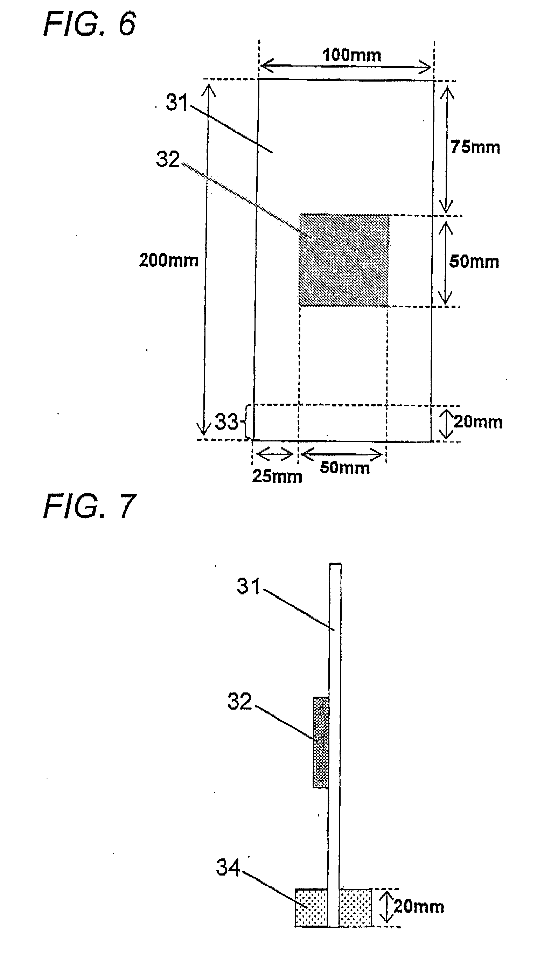

(5) Twist-proof Adhesiveness Evaluation (see Figs. 6 to 8): [Preparation of test Piece (Fig. 6)]

A face (pressure-sensitive adhesive layer side) opposite to the hard coat face of a polarizer (Nitto Denko's trade name, "TEG1465DUHC", having a size of 100 mm width × 200 mm length, and having a pressure-sensitive adhesive layer on one face) was attached to one side (entire face) of an acrylic plate (PMMA plate, Mitsubishi Rayon's "Acrylite MR-200", having a size of 100 mm width × 200 mm length × 1.5 mm thickness), thereby preparing an attached structure 31 of the acrylic plate and the polarizer (acrylic plate/polarizer).

Each of the double-sided pressure-sensitive adhesive sheet produced in Examples and Comparative Examples was cut into a sheet piece having a size of 50 mm width × 50 mm length, the separator on one pressure-sensitive adhesive face was peeled, and the sheet piece was attached to one side (entire face) of an acrylic plate (PMMA plate, Mitsubishi Rayon's "Acrylite MR-200", having a size of 50 mm width x 50 mm length × 1.5 mm thickness), thereby preparing an attached structure 32 of the acrylic plate and the double-sided pressure-sensitive adhesive sheet (acrylic plate/double-sided pressure-sensitive adhesive sheet).

As shown in Fig. 6, in the acrylic plate/double-sided pressure-sensitive adhesive sheet attached structure 32, the other one of the separators was peeled from the double-sided pressure-sensitive adhesive sheet; and the attached structure 32 was stuck to the center of the acrylic plate/polarizer attached structure 31, and left in an atmosphere at 23°C and 50% RH for 1 days, thereby preparing a test piece for twist-proof adhesiveness evaluation.

The attached structure 31 and the attached structure 32 were so attached that the double-sided pressure-sensitive adhesive sheet side of the attached structure 32 faced the hard coat face side of the polarizer of the attached structure 31.

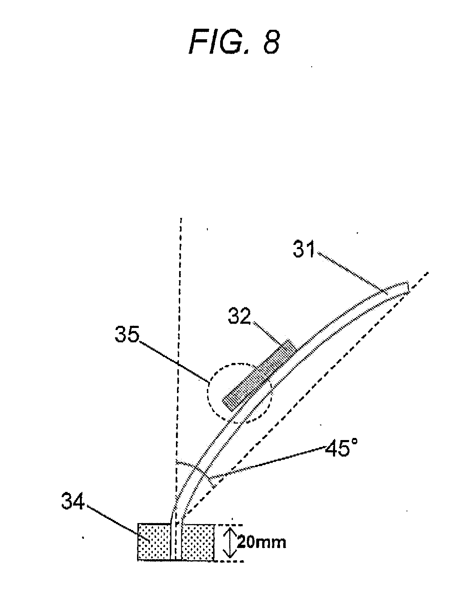

[Evaluation Method (Fig. 7 and Fig. 8)]

The sample was tested for evaluation in an atmosphere at 23°C and 50% RH.

As shown in Fig. 7, the part of 20 mm from the lower edge of the test piece prepared in the above (the part 33 in Fig. 6) was fixed with a jack 34.

Next, as shown in Fig, 8, the test piece was bent at an angle of 45° (so that the top of the test piece and the jacked part thereof could be at an angle of 45°) in the plane direction of the attached structures 31 and 32.

In the thus-bent state, the test piece was kept as such for 60 seconds, and checked for the peel (separation) 35 of the attached structure 32 from the attached structure 31.

The number of samples (number, N) was 2.

(6) Transparency (whole light transmittance and haze value):

The double-sided pressure-sensitive adhesive sheet produced in Examples and Comparative Examples was, after one of the separators was peeled, attached to a slide glass (Matsunami Glass Industry's trade name, "S-1111", having a while light transmittance of 91.8% and a haze of 0.4%), and then the other one of the separators was peeled to prepare a test piece having a layer constitution of double-sided pressure-sensitive adhesive sheet (acrylic pressure-sensitive adhesive layer)/slide glass.

The whole light transmittance and the haze value (%) of the test piece were measured, using a haze meter (Murakami Color Search Laboratory's trade name "HM-150"). The haze value (%) was computed according to a formula of "(diffuse transmittance/whole light transmittance) × 100".

Table 1

| | Monomer Blend Formulation in preparing prepolymer composition | Formulation of composition for forming acrylic pressure-sensitive adhesive layer | | Properties | | | | | | | |
|---|---|---|---|---|---|---|---|---|---|---|---|
| | Kinds of monomers and blend ratio of monomers (by weight) | Prepolymer Composition | Coronate L | Gel fraction | Pressure-sensitive adhesive layer thickness | Degree of polymerization | 180-degree peel adhesion force (with respect to polarizer) | 180-degree peel adhesion force (with respect to acrylic plate) | L-shape peel force | Constant-load 1-hour peel distance |
| | | (wt.pt.) | (wt.pt.) | (%) | ($\mu$m) | (%) | (N/25 mm) | (N/25 mm) | (MPa) | (mm) |
| Example 1 | 2EHA/NVP/HEAA 70/26/4 | 100 | 0.05 | 53 | 151 | 99 | 8.0 | 22.0 | 0.46 | 0 |
| Example 2 | | 100 | 0.15 | 76 | 146 | 100 | 8.1 | 19.5 | 0.48 | 0 |
| Example 3 | 2EHA/2MEA/NVP/HEAA 80/11.5/7/1.5 | 100 | 0.07 | 46 | 149 | 100 | 2.7 | 19.0 | 0.22 | 0 |
| Example 4 | | 100 | 0.1 | 57 | 152 | 100 | 2.6 | 19.1 | 0.23 | 0 |
| Comparative Example 1 | 2EHA/4HBA 99/1 | 100 | 0.05 | 39 | 186 | 98 | 2.0 | 11.0 | 0.15 | dropped |
| Comparative Example 2 | | 100 | 0.15 | 68 | 189 | 98 | 1.8 | 10.2 | 0.16 | dropped |

Table 1 (Continued)

| | Properties | | | | | | | | Evaluation | |
|---|---|---|---|---|---|---|---|---|---|---|
| | Constant-load 3-hours peel distance | Constant-load 24-hours peel distance | Storage elastic modulus (23°C) | Storage elastic modulus (80°C) | Loss elastic modulus (23°C) | Loss elastic modulus (80°C) | Whole light transmittance | Haze value | Twist-proof adhesiveness | |
| | (mm) | (mm) | (Pa) | (Pa) | (Pa) | (Pa) | (%) | (%) | sample N=1 | sample N=2 |
| Example 1 | 0 | 0 | $4.0 \times 10^5$ | $1.1 \times 10^5$ | $3.3 \times 10^5$ | $2.0 \times 10^4$ | 92.2 | 0.5 | not peeled | not peeled |
| Example 2 | 0 | 0 | $4.6 \times 10^5$ | $1.3 \times 10^5$ | $3.8 \times 10^5$ | $2.2 \times 10^4$ | 92.2 | 0.5 | not peeled | not peeled |
| Example 3 | 1 | 16 | $7.7 \times 10^4$ | $4.3 \times 10^4$ | $2.2 \times 10^4$ | $1.5 \times 10^4$ | 92.2 | 0.4 | not peeled | not peeled |
| Example 4 | 0 | 21 | $7.9 \times 10^4$ | $4.4 \times 10^4$ | $2.4 \times 10^4$ | $1.5 \times 10^4$ | 92.2 | 0.4 | not peeled | not peeled |
| Comparative Example 1 | dropped | dropped | $4.4 \times 10^4$ | $2.5 \times 10^4$ | $1.4 \times 10^4$ | $1.3 \times 10^4$ | 92.3 | 0.3 | peeled | peeled |
| Comparative Example 2 | dropped | dropped | $4.9 \times 10^4$ | $2.9 \times 10^4$ | $1.4 \times 10^4$ | $1.2 \times 10^4$ | 92.3 | 0.3 | peeled | peeled |

EP 2 325 272 A2

As seen from the evaluation results, the double-sided pressure-sensitive adhesive sheets of the invention (Examples) did not generate peeling (floating) in the twist-proof adhesiveness test, and exhibited excellent twist-proof adhesiveness. On the other hand, in the case where the double-sided pressure-sensitive adhesive sheet (Comparative Examples) which do not satisfy the requirements in the invention in that the L-shape peel force is too small or the constant-load 3-hours peel distance is too large, peeling (floating) was generated in the twist-proof adhesiveness test, and they were poor in the twist-proof adhesiveness. Experience shows that, even in the case that the double sided pressure-sensitive adhesive tape is actually used for attaching window lens and LCD in portable telephones, digital cameras or the like and bending stress, twisting stress or quirking stress is given to the window lens, the double-sided pressure-sensitive adhesive sheet which does not generate peeling (floating) in the twist-proof adhesiveness test is free from a trouble of peeling between window lens and the double-sided pressure-sensitive adhesive sheet or between LCD surface and the double-sided pressure-sensitive adhesive sheet.

While the present invention has been described in detail and with reference to specific embodiments thereof, it will be apparent to one skilled in the art that various changes and modifications can be made therein without departing from the scope thereof.

This application is based on Japanese patent application No. 2009-256033 filed November 9, 2009, the entire contents thereof being hereby incorporated by reference.

**Claims**

1. An optical-use pressure-sensitive adhesive sheet comprising a pressure-sensitive adhesive layer having, as measured through dynamic viscoelastometry, a storage elastic modulus at 80°C of at least $2.0 \times 10^4$ Pa and a loss elastic modulus at 80°C of at least $1.0 \times 10^4$ Pa,
   the pressure-sensitive adhesive sheet having a peel force, as measured in the following L-shape peel test, of at least 0.16 MPa, and having a peel distance, as measured in the following constant-load peel test (under a load of 100 gf for 3 hours), of at most 50 mm,
   wherein the L-shape peel test is performed such that an L-shaped stainless fixture and an acrylic plate are attached via the pressure-sensitive adhesive sheet (size: 25 mm length $\times$ 25 mm width) and processed in an autoclave under conditions at 50°C and at 5 atmospheres for 15 minutes, and subsequently the peel force is measured by pulling the stainless fixture in the direction vertical to the surface of the acrylic plate at a pulling speed of 200 mm/min under conditions at 23°C and 50% RH, and
   wherein the constant-load peel test (under a load of 100 gf for 3 hours) is performed such that a pressure-sensitive adhesive layer side of the pressure-sensitive adhesive sheet (20 mm width $\times$ 60 mm length) is stuck to one surface of an acrylic plate and then processed in an autoclave under conditions at 50°C and at 5 atmospheres for 15 minutes, and subsequently, the peel distance is measured after the pressure-sensitive adhesive sheet is let stand under conditions at 23°C and 50% RH for 3 hours while a load of 100 gf is kept applied to the end in the lengthwise direction of the pressure-sensitive adhesive sheet, in the direction vertical to the surface of the acrylic plate.

2. The optical-use pressure-sensitive adhesive sheet according to claim 1, which has a whole light transmittance in a visible light wavelength region of at least 90% and a haze value of less than 1.0%.

3. The optical-use pressure-sensitive adhesive sheet according to claim 1 or 2, which has, as measured at a pulling speed of 200 mm/min, a 180°-peel force with respect to an acrylic plate of at least 10 N/25 mm.

4. The optical-use pressure-sensitive adhesive sheet according to any one of claims 1 to 3, wherein the pressure-sensitive adhesive layer has a gel fraction of from 30 to 80% by weight.

5. The optical-use pressure-sensitive adhesive sheet according to any one of claims 1 to 4, wherein the pressure-sensitive adhesive layer is an acrylic pressure-sensitive adhesive layer.

6. The optical-use pressure-sensitive adhesive sheet according to claim 5, wherein the acrylic pressure-sensitive adhesive layer contains an acrylic polymer formed of one or more monomer ingredients including as an indispensable monomer ingredient, an alkyl (meth)acrylate having a linear or branched alkyl group having from 1 to 14 carbon atoms and/or an alkoxyalkyl (meth)acrylate.

7. The optical-use pressure-sensitive adhesive sheet according to any one of claims 1 to 6, wherein the pressure-sensitive adhesive layer is formed by irradiating a composition containing a monomer mixture or a prepolymer thereof with UV rays.

*FIG. 1*

11

100mm

1.0mm

30mm   30mm

*FIG. 2*

PULLING DIRECTION

14

11

13

12

*FIG. 3*

*FIG. 4*

*FIG. 5*

## FIG. 6

100mm

31

32

75mm

200mm

50mm

33

20mm

25mm 50mm

## FIG. 7

31

32

34

20mm

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003238915 A
- JP 2003342542 A
- JP 2004231723 A
- JP 2009256033 A